# EUROPÄISCHE PATENTSCHRIFT

(11) **EP 4 074 398 B1**
(45) Veröffentlichungstag und Bekanntmachung des Hinweises auf die Patenterteilung: **06.12.2023**
(21) Anmeldenummer: 22162081.8
(22) Anmeldetag: 15.03.2022
(51) Int. Cl.: B01D 29/64, D06F 39/10

(54) **FILTERSYSTEM, WASSERFÜHRENDES HAUSHALTSGERÄT UND VERFAHREN ZUM FILTERN EINES FLUIDS**
FILTER SYSTEM, WATER CONVEYING DOMESTIC APPLIANCE AND METHOD FOR FILTERING A FLUID
SYSTÈME DE FILTRE, APPAREIL ÉLECTROMÉNAGER À CIRCULATION D'EAU ET PROCÉDÉ DE FILTRAGE D'UN LIQUIDE

(30) Priorität: 15.04.2021 DE 102021203746
(43) Veröffentlichungstag der Anmeldung: 19.10.2022
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- EP-A1- 3 721 976
- EP-A1- 3 816 336
- WO-A1-2019/081013
- JP-A- 2008 142 267

## Beschreibung

Die vorliegende Erfindung betrifft ein Filtersystem mit einer Rakel zur Reinigung einer Filterfläche, ein wasserführendes Haushaltsgerät und ein Verfahren zum Filtern eines Fluids in einem wasserführenden Haushaltsgerät.

Filtersysteme werden in Abpump- oder Umpumpleitungen von wasserführenden Haushaltsgeräten eingesetzt, um Partikel aus einem Fluid zu filtern. Dabei ist das schnelle Verstopfen der Filtersysteme ein Problem. Es kann sogar vorkommen, dass es durch schnelles Vollsetzen von Filtersystemen nicht möglich ist, eine in einem Arbeitsgang verwendete Fluidmenge vollständig zu filtern.

Aus der WO 2019/081013 A ist ein Abstreifer bekannt, der aus einem Fluid ausgefilterte Partikel von der Filterfläche entfernt.

Aus der EP 3 721 976 A ist ein System zum Reinigen eines Membranelements eines wasserführenden Haushaltsgeräts bekannt, das eine Stützstruktur aufweist, an der das Membranelement angebunden ist. Ferner ist ein Rakelelement vorgesehen, das im Betrieb zum Reinigen des Membranelements entlang einer Rakelbewegungsrichtung über das Membranelement bewegbar ist. Die Stützstruktur in dem von dem Rakelelement bearbeiteten Bereich weist ausschließlich Stützstege auf, die sich längs der Rakelbewegungsrichtung erstrecken.

Demgemäß wird die Filteroberfläche durch ein mechanisches Reinigen (das sogenannte Rakeln) von Partikeln befreit. Dabei kann sich die Rakel kontinuierlich in einer Richtung oder in einer Oszillationsbewegung (d. h. in einer sich wiederholenden Hin- und Her Bewegung) bewegen. Jedoch führen die im Stand der Technik bekannten Systeme ihre Reinigung der Filterfläche konstant und ohne Rücksicht auf äußeren Bedingungen des Filtersystems durch.

Die EP 3 816 336 A1 beschreibt ein Wäschepflegegerät mit einem Filterelement zum Filtern von Waschflüssigkeiten. Das Filterelement besteht aus einem Filtergehäuse und einer Filtermembran, welche durch ein Reinigungselement in Form eines Rakels hinsichtlich Verunreinigungen bzw. Filterrückständen gesäubert wird. Hierzu wird das Reinigungselement innerhalb des Filterinnenraums verlagert. Das Reinigungselement vollführt eine oszillierende Bewegung durch ein Betätigen eines hydraulischen Ventils. Dabei fungiert das Reinigungselement als ein Kolben, welcher von dem Druck der Waschflüssigkeit verschoben wird.

Somit können sich diese Systeme nicht an sich verändernde Betriebsbedingungen anpassen, was zur Folge hat, dass leichter Defekte in dem Filtersystem auftreten können und sich somit der Wartungsaufwand des Filtersystems erhöht.

Daher macht es sich die vorliegende Erfindung zur Aufgabe, ein Filtersystem bereitzustellen, das sich individuell und automatisch auf sich ändernde Betriebszustände einstellen kann und dennoch eine einfache Steuerung aufweist.

Gelöst wird diese Aufgabe durch ein Filtersystem mit den Merkmalen des Anspruchs 1, durch ein wasserführendes Haushaltsgerät mit den Merkmalen des Anspruchs 8 und mit einem Verfahren zum Filtern eines Fluids mit den Merkmalen des Anspruchs 9.

Gemäß einem Aspekt der vorliegenden Erfindung wird ein Filtersystem mit einer Rakel zur Reinigung einer Filterfläche in einem wasserführenden Haushaltsgerät bereitgestellt, wobei das Filtersystem umfasst:
eine Filterfläche, die dazu ausgestaltet ist, Partikel aus einem Fluid zu filtern,
eine Rakel, die dazu ausgestaltet ist, einen Rakelbereich der Filterfläche abzurakeln, um den Rakelbereich von Partikeln zu befreien und die Partikel einem Depot zuzuführen, und
einen Rakelantrieb, der dazu ausgestaltet ist, die Rakel oszillierend über den Rakelbereich der Filterfläche zu bewegen,
wobei eine Größe des Rakelbereichs variabel ist, insbesondere in Abhängigkeit von einer Menge abgerakelter Partikel.

Gemäß einem Aspekt der vorliegenden Erfindung wird ein Filtersystem bereitgestellt, das eine Rakel mit einer Oszillationsbewegung umfasst, deren Amplitude der Oszillation (d.h. der Bereich, über den sich die Oszillationsbewegung der Rakel erstreckt) sich automatisch auf unterschiedliche Betriebsbedingungen anpasst. Eine Betriebsbedingung kann beispielsweise eine bestimmte Menge an ausgefilterten Partikeln in dem Filtersystem darstellen. Damit liegt eine andere Betriebsbedingung vor, wenn das Filtersystem keine oder nur wenige Partikel enthält verglichen mit einem Zustand, in dem das Filtersystem viele Partikel enthält.

Die Oszillationsbewegung bietet gegenüber einer umlaufenden Bewegung die Möglichkeit, von der Filterfläche abgerakelte Partikel von der Rakel zu lösen und beispielsweise in ein oder mehrere Depots zu verschieben und dort abzulegen. Ferner können die dort abgelegten Partikel durch die Rakel komprimiert werden. Die oszillierende Bewegung bietet zudem den Vorteil, dass Partikel nicht fortlaufend von der Rakel über die Filterfläche geschoben werden und dadurch die Filterfläche beschädigen.

Die oszillierende Bewegung kann dabei eine Hin- und Her Bewegung der Rakel sein. Damit weist die Bewegung der Rakel eine Amplitude auf, die Wendepunkte aufweist, an denen die Rakel ihre Bewegungsrichtung ändert (d.h. umkehrt). Beispielsweise kann sich die Rakel bei ihrer oszillierenden Bewegung in einem Schwenkbereich um +/- 35° (beispielsweise scheibenwischerartig) hin- und herbewegen und dabei die abgerakelten Partikel abwechselnd zu den beiden Seiten des Rakelbereichs verschieben. Mit anderen Worten kann der Rakelbereich die Form eines Ringsegments haben. Durch die Richtungsänderung bleiben die Partikel am Rand des Rakelbereichs liegen (d.h. werden dort abgelegt) und werden durch nachfolgend in diesen Bereich verschobene Partikel weiter von dem Rakelbereich wegverschoben. Der Bereich, in dem die abgerakelten Partikel abgelagert werden, kann als Depot bezeichnet werden. Das Depot kann dabei ein Teil der Filterfläche sein. Ferner kann das Depot alternativ oder zusätzlich eine Kammer sein, die nicht mehr Teil der Filterfläche ist, sondern dazu ausgestaltet ist, Partikel aufzunehmen. Das Depot kann beispielsweise von außen für einen Nutzer zugänglich sein, um die Partikel zu entnehmen. Ferner kann die Rakel einen Rakelbereich von +- 90° abrakeln (d.h. der Rakelbereich kann die Form eines halbrunden Ringsegments haben). Die abgerakelten Partikel können dann einem einzelnen Depot zugeführt werden, das angrenzend an den Rakelbereich angeordnet ist. Somit können die Partikel konzentriert gesammelt werden was die Entnahme der Partikel erleichtert.

Die Größe des Rakelbereichs kann von der Amplitude der Rakelbewegung abhängig sein. Mit anderen Worten kann der Rakelbereich durch zwei Anschläge definiert sein. Die Anschläge können mechanische Anschläge sein, an die die Rakel anstößt und daraufhin ihre Richtung ändert, oder können durch den Rakelantrieb vorgegebene Anschläge sein (beispielsweise durch ein Gestänge, Kurbelantrieb oder Getriebe). Ferner können auch Partikel, die von der Filterfläche abgerakelt und in einem oder in mehreren Depots abgelagert wurden, als die Anschläge dienen. Somit können die Anschläge in Abhängigkeit der Menge an abgerakelten Partikeln ortsvariabel sein. Ist beispielsweise ein Depot vollständig mit abgerakelten Partikeln gefüllt, so können die neu zugeführten Partikel nicht mehr in das Depot hineinverschoben werden und verbleiben an oder auf dem Rakelbereich. Dadurch kann sich ein Anschlag, der durch die Partikel gebildet ist, auf dem ursprünglichen Rakelbereich befinden und den Rakelbereich der darauffolgenden oszillierenden Bewegung somit verkleinern, so dass ein angepasster Rakelbereich entsteht. Folglich kann der Rakelbereich variabel sein (d.h. die Größe und/oder die Lage des Rakelbereichs). Dadurch bietet sich der Vorteil, dass zumindest ein Teil der Filterfläche (d. h. der Rakelbereich) durch die Rakel zuverlässig abgerakelt wird, selbst wenn eine große Partikelfracht aus dem Fluid ausgefiltert wurde und in das Depot verschoben wurde. Demgegenüber kann ein bekanntes Filtersystem schnell außer Betrieb fallen, wenn die Filterfläche von Partikeln belegt wird. So kann beispielsweise ein konstant arbeitender Reinigungsmechanismus durch die Partikel blockiert werden, so dass es zu Schäden an dem Antrieb und/oder dem Abstreifer kommen kann.

Im Gegensatz dazu kann der erfindungsgemäße Rakelantrieb dazu ausgestaltet sein, die Rakel nur in dem variablen Rakelbereich zu bewegen. Folglich kann ein Schaden an der Rakel und/oder an dem Rakelantrieb auch bei einem kleiner werdenden Rakelbereich vermieden werden. Dadurch kann die Lebensdauer des Filtersystems erhöht sein.

Die Partikel können beispielsweise Haare, Stoffreste, Wäschebehandlungsmittelreste oder dergleichen umfassen. Ferner können die Partikel auch Mikroplastik mit einer Größe im zweistelligen Mikrometerbereich umfassen. Dementsprechend kann die Filterfläche so ausgestaltet sein, dass sie Partikel mit einer Größe von 20 bis 100 µm ausfiltern kann. Dies bietet den Vorteil, dass das Fluid zuverlässig gefiltert werden kann und beispielsweise gesetzliche Bestimmungen erfüllt werden können. Vorzugsweise ist die Filterfläche so ausgestaltet, dass sie Partikel mit einer Größe im Bereich von 30 bis 70 µm ausfiltern kann. Dadurch kann gewährleistet sein, dass selbst Mikroplastik zufriedenstellend aus dem Fluid ausgefiltert werden kann.

Die Rakel kann ein Abstreifkörper mit einer definierten Kante bzw. mit einem definierten Bereich sein, mit dem eine zu berakelnde Fläche (d. h. der Rakelbereich) mechanisch von Partikeln befreit werden kann. Die Kante oder der Bereich, kann dabei eine harte Kante, eine weiche Kante (z. B. eine Gummilippe) und/oder aus mehreren Borsten bestehen. Somit kann die Rakel an die zu erwartende Partikelfracht optimal angepasst sein.

Die Filterfläche kann eine im Wesentlichen flächige Struktur aus einem Filtermedium wie beispielsweise Kunstfasergewebe (beispielsweise Gaze), ein Kunststoffvlies, ein Lochblech und/oder eine Lochfolie sein. Eine solche Filterfläche bietet den Vorteil, dass sie eine wenig dehnbare aber biegsame Form aufweist und somit ideal für eine Kombination mit einem mechanischen Abstreifelement (Rakel) geeignet ist.

Vorzugsweise ist die Größe des Rakelbereichs von einer Partikelmenge in dem Depot abhängig, und wobei das Depot vorzugsweise direkt an zumindest eine Seite des Rakelbereichs angrenzt.

Das Depot kann demnach direkt an einem Punkt oder an beiden Punkten positioniert sein, bei dem oder bei denen sich die Bewegungsrichtung der Rakel ändert. Es können zwei voneinander separierte Depots vorgesehen sein (d.h. an jedem Wendepunkt der Rakel eines) oder ein zusammenhängendes Depot. Im Folgenden wird das Depot immer im Singular beschrieben, die Merkmale gelten analog auch für zwei oder mehr vorgesehene Depots. Durch das direkte Angrenzen des Depots an den Rakelbereich können Partikel zuverlässig von der Rakel in das Depot verschoben werden, ohne dass eine weitere Transfervorrichtung nötig ist. Nachfolgende Partikel können bereits abgelagerte Partikel weiter in das Depot hineinverschieben. Ist das Depot vollständig mit Partikeln gefüllt, können nachfolgenden Partikel die bereits in dem Depot befindlichen Partikel zusammendrücken und damit komprimieren. Durch die Komprimierung kann verbleibendes Fluid aus den Partikeln herausgedrückt werden. Somit können die Partikel so zusammengedrückt werden, dass sie entwässert werden. Dabei kann das aus den zusammengepressten Partikeln entweichende Wasser durch die Filterfläche, auf der sich das Depot zumindest teilweise befinden kann, abfließen. Dadurch kann ein Partikelkuchen aus den Partikeln gebildet werden, der nur einen geringen Wasseranteil aufweist. Dadurch kann eine Entnahme und Entsorgung der Partikel vereinfacht werden und die Entstehung von unangenehmen Gerüchen vermieden werden.

Erfindungsgemäß ist der Rakelantrieb dazu ausgestaltet, die Bewegungsrichtung der Rakel umzukehren, wenn ein vorbestimmter Widerstand an der Rakel auftritt.

Ein Widerstand kann an der Rakel auftreten, wenn diese daran gehindert wird, sich in ihrer derzeitigen Bewegungsrichtung weiterzubewegen. Dies tritt beispielsweise dann auf, wenn die Rakel an einen Anschlag anstößt. Dabei kann der Rakelantrieb so ausgestaltet sein, dass er die Bewegungsrichtung der Rakel erst dann umkehrt, wenn ein bestimmter Widerstand überschritten wird. Somit kann gewährleistet sein, dass die Rakel nicht schon deswegen ihre Richtung ändert, weil sie Partikel von der Filteroberfläche abrakelt (d.h. mechanisch entfernt). Ferner kann der Rakelantrieb so ausgestaltet sein, dass er die Bewegungsrichtung der Rakel ändert, wenn der Widerstand so groß ist, dass die Rakel Partikel in dem Depot komprimiert. Dadurch kann erreicht werden, dass die Rakelfläche variabel ist, da in Abhängigkeit, beispielsweise der Menge von in dem Depot aufgenommenen Partikel, die Rakel früher oder später ihre Bewegungsrichtung ändert. Ferner können die Partikel in dem Depot komprimiert und/oder entwässert werden. Der Widerstand kann dabei durch einen Sensor erfasst werden, worauf hin der Rakelantrieb die Richtung der Bewegung der Rakel ändern kann. Alternativ kann der Rakelantrieb auch so ausgestaltet sein, dass er bei Erreichen eines bestimmten Widerstands (beispielsweise eines Kippmoments, nähere Informationen weiter unten) automatisch die Bewegungsrichtung der Rakel ändert. Ferner können Daten zu der Oszillationsamplitude oder der Oszillationsfrequenz erfasst werden, und basierend darauf die Bewegungsrichtung der Rakel umgekehrt werden. Ferner kann das Drehmoment (bei Drehbewegung), bzw. die Kraft (bei Linearbewegungen) direkt oder indirekt gemessen werden und damit der Widerstand an der Rakel bestimmt werden. Dazu kann eine Steuereinheit in dem Filtersystem vorgesehen sein, die den Widerstand an der Rakel erfasst oder berechnet und bestimmt, dass die Bewegungsrichtung der Rakel bei Überschreiten eines vorbestimmten Widerstands, geändert wird.

Das Filtersystem kann ein zylindrisches Gehäuse aufweisen, wobei die Filterfläche zumindest teilweise als die Mantelfläche des Gehäuses vorgesehen ist. Mit anderen Worten kann der Filter eine zylindrische Form aufweisen, bei der das ungefilterte Fluid beispielsweise dem Inneren des Filtersystems zugeführt wird und nach außen durch die Gehäusewand (d.h. durch die Filterfläche) gefiltert wird. Dabei kann die Rakel die innere Oberfläche (d.h. die Filterfläche) des Gehäuses oszillierend abrakeln. Dabei kann das Depot zwischen den beiden Wendepunkten (z.B. zwei Anschlägen) der Rakel gebildet sein. Gemäß einem Aspekt der Erfindung können die beiden Wendepunkte der Rakel in einer Ausgangsstellung, bei der keine Partikel im Depot vorhanden sind, an derselben Position liegen. Mit anderen Worten kann in der Ausgangsstellung das Depot kein Volumen aufweisen. Somit kann das Depot erst gebildet werden, wenn Partikel von der Rakel an den Wendepunkten abgelagert werden. Dies hat den Vorteil, dass ein sehr kompaktes Filtersystem bereitgestellt werden kann, weil im Ausgangszustand nahezu die gesamte Fläche des Gehäuses als Filterfläche bereitgestellt werden kann. Ferner ist somit kein oder nur wenig Raum für ein Depot benötigt, wenn sich keine oder nur wenige Partikel in dem Depot befinden.

Alternativ können die Wendepunkte der Rakel voneinander beabstandet sein. Beispielsweise kann eine Wand zwischen den beiden Wendepunkten angeordnet sein, gegen die die Partikel gedrückt werden können, wenn die Rakel Partikel in das Depot drückt kann die Wand demgemäß als Gegendruckfläche dienen, so dass die Partikel zwischen der Wand und der Rakel zusammengedrückt (z.B. komprimiert) werden. Dies bietet den Vorteil, dass die Lage des Depots durch die Wand eindeutig festgelegt ist und dass die Partikel mithilfe der Wand zu einem größeren Grad komprimiert werden können.

Vorzugsweise ist der Rakelantrieb dazu konfiguriert, die Rakel synchron zu einem Betrieb einer Pumpe, die dazu ausgestaltet ist, dass Fluid dem Filtersystem zuzuführen, zu bewegen.

Bei der Pumpe kann es sich beispielsweise um eine Umwälzpumpe handeln, die in einem wasserführenden Haushaltsgerät vorgesehen ist, um Fluid einem Prozess in dem wasserführenden Haushaltsgerät oder einem Abfluss zuzuführen. Synchron kann in diesem Fall bedeuten, dass der Rakelantrieb in Abhängigkeit des Betriebs der Pumpe aktiviert wird, um die Rakel zu bewegen. Mit anderen Worten kann die Rakel synchron zu dem Pumpbetrieb bewegt werden. Dabei kann der Rakelantrieb die Rakel nur in einem Zeitraum betreiben, in dem auch die Pumpe betrieben wird. Zusätzlich kann auch ein Vorlauf und/oder Nachlauf vorgesehen sein. Das heißt, der Rakelantrieb kann vor dem tatsächlichen Pumpbetrieb der Pumpe betrieben werden, um die Filterfläche (d.h. den Rakelbereich) von Partikeln zu reinigen. Somit kann sichergestellt werden, dass, wenn die Pumpe dem Filtersystem Fluid zuführt, der Rakelbereich im Wesentlichen frei von Partikeln ist. Während des Betriebs des Rakelantriebs beginnt dann die Pumpe das Fluid dem Filtersystem zuzuführen. Das Zuführen mittels Pumpe des Fluids zur Filtereinheit kann sowohl saugend (saugseitiger Anschluss der Filtereinheit an die Pumpe) als auch drückend (druckseitiger Anschluss der Filtereinheit) realisiert sein. Zusätzlich oder alternativ kann nach einem Ende des Pumpbetriebs der Pumpe der Rakelantrieb für eine vorbestimmte Zeit beispielsweise 2 bis 10 Sekunden weiterbetrieben werden, um den Rakelbereich nach einem Ende einer Fluidzufuhr von Partikel zu befreien. Somit kann gewährleistet werden, dass das Filtersystem stets einsatzbereit ist.

Dazu können die Pumpe und der Rakelantrieb in Reihe geschaltet sein, um eine einfache Ausgestaltung der Synchronisierung des Rakelantriebs und der Pumpe zu erreichen. Alternativ kann der Rakelantrieb parallel zu der Pumpe geschaltet sein und durch einen entsprechend gesteuerten Schalter aktiviert und deaktiviert werden. In jedem Fall kann dem Rakelantrieb der gleiche Strom wie der Pumpe zugeführt werden. Dadurch kann insgesamt eine einfache Ausgestaltung der Steuerung des Rakelantriebs und der Pumpe erreicht werden.

Vorzugsweise umfasst der Rakelantrieb einen Einphasensynchronmotor.

Das heißt der Antrieb der Rakel kann über einen Einphasensynchrongetriebemotor erfolgen, bei dem die sonst übliche Drehrichtungsvorgabe (beispielsweise durch eine Drehrichtungssperre, einen Freilauf oder sonstige drehrichtungsvorgebende Mechanismen) nicht vorhanden ist. Dadurch kann der Einphasensynchrongetriebemotor, sobald er mit Strom (Wechselspannung) versorgt wird, in einer zufälligen Richtung anlaufen. Zum Erzeugen der Oszillationsbewegung der Rakel kann dabei die spezielle Charakteristik des Einphasensynchronmotors ausgenutzt werden. Der Motor hat eine Drehzahl, die unabhängig von der Last synchron zu der Frequenz der versorgenden Wechselspannung ist, das heißt bei zunehmender Belastung bleibt die Drehzahl des Motors solange konstant bis das sogenannte Kippmoment (ein bestimmter Widerstand an der Rakel) überschritten ist. Bei einem Überschreiten des Kippmoments (d.h. dem Motor wird mehr Drehmoment abverlangt, als er zu liefern in der Lage ist) fällt der Motor außer Betrieb und der Rotor bleibt zunächst stehen. Wegen der weiterhin anliegenden Versorgungsspannung führt der Rotor eine Oszillation mit der Frequenz der Versorgungsspannung aus und fängt sich bei der nächsten Gelegenheit auf eine kontinuierliche Drehung ein. Somit kann der Richtungswechsel der Rakelbewegung äußerst einfach realisiert werden, ohne dass dazu eine zusätzliche Steuerung notwendig ist. Somit unterbricht der Motor den Antrieb der Rakel gemäß einem Aspekt der vorliegenden Erfindung, sobald auf die Rakel ein Widerstand wirkt, so dass das Kippmoment des Motors überschritten wird. Wird der Motor dann weiter mit Strom versorgt, versucht der Rotor wieder dem Magnetfeld zu folgen bis er in eine der zuvor ausgeführten entgegengesetzte Richtung anläuft, um die Rakel in eine der zuvor ausgeführten Bewegungsrichtung entgegengesetzten Richtung zu bewegen. Somit kann ein einfaches System zur Erzeugung der oszillierenden Bewegung der Rakel bereitgestellt werden, das sich variabel an unterschiedliche Größen des Rakelbereichs anpassen kann.

Die Drehenergie des Einphasensynchrongetriebemotors kann dabei durch ein Getriebe auf die Rakel übertragen werden. Vorzugsweise kommt ein Getriebe mit einer Übersetzung von 1:100 zum Einsatz. Somit kann eine optimale Rakelgeschwindigkeit bei der Versorgung des Motors mit einer Spannung von 50 Hz sichergestellt werden.

Im Folgenden wird der Betrieb des Einphasensynchrongetriebemotors gemäß einem Aspekt der vorliegenden Erfindung detailliert Schritt für Schritt beschrieben:
Nach dem Einschalten des Motors durch Anlegen einer Versorgungsspannung (beispielsweise einer Wechselspannung mit 50 Hz) startet der Motor in einer zufälligen Drehrichtung. Der Motor erreicht im Rahmen von Spiel (vor allem im Getriebe) und Elastizitäten im Antriebssystem die Zieldrehzahl innerhalb eines halben Zyklus der Wechselspannung und dreht sich dann gleichmäßig weiter. Das Antriebssystem verspannt sich in Drehrichtung bis das Spiel auf null geht, das Drehmoment wirkt auf die Rakel und die Rakel läuft in der gegebenen Bewegungsrichtung los. Dadurch beginnt die Rakel den Rakelbereich abzurakeln. Der Arbeitspunkt des Motors stellt sich auf den Widerstand an der Rakel ein. Der Widerstand an der Rakel kann ein Widerstand sein, der beim Überfahren des Rakelbereichs entsteht (d.h. insbesondere aufgrund Reibung zwischen Rakel und Filterfläche). Stößt die Rakel gegen ein Hindernis (beispielsweise einen Anschlag und/oder eine Ansammlung von Partikeln), so dass sich der Widerstand an der Rakel erhöht, versucht der Rotor des Motors weiterhin dem Startormagnetfeld zu folgen und sich wieder auf eine synchrone Drehung einzufangen. Der Rotor oszilliert einige Male hin und her und fängt sich zufällig in einer der beiden Drehrichtungen ein. Da die vorherige Bewegungsrichtung der Rakel noch immer durch den erhöhten Widerstand an der Rakel blockiert ist, kann der Motor nicht in der vorherigen Drehrichtung drehen. Mit anderen Worten kann der Widerstand an der Rakel ein Moment an dem Motor bewirken, das größer als das Kippmoment des Motors ist. In dieser Situation kann der Motor nicht gegen das Kippmoment anlaufen (d. h. gegen das Spiel im System anlaufen, soweit ein Spiel in dieser Situation überhaupt vorhanden ist). Somit wiederholt sich die Oszillation des Rotors in dem Motor solange, bis der Motor zufällig in einer der vorherigen Drehrichtung entgegengesetzten Drehrichtung anläuft. In dieser Richtung ist zunächst genügend Spiel im System, um den Rotor auf Zieldrehzahl zu beschleunigen. Dann wird ein Arbeitspunkt in der der vorherigen Drehrichtung entgegengesetzten Drehrichtung eingenommen. Folglich bewegt sich die Rakel in einer der vorherigen Bewegungsrichtung entgegengesetzten Bewegungsrichtung über die Rakelfläche. Stößt die Rakel in der aktuellen Bewegungsrichtung wieder an ein Hindernis, wiederholt sich das zuvor Beschriebene.

Somit kann der Rakelbereich zwischen den zwei Wendepunkten der Rakel (beispielsweise durch einen mechanischen Anschlag und/oder durch in dem Depot aufgenommene Partikel) definiert sein. Dabei kann die Position der Wendepunkte von einem auf die Rakel wirkenden Widerstand abhängig sein. Folglich kann die Rakel Ihre Bewegungsrichtung ändern, wenn der Widerstand zu hoch ist (d.h. am Motor ein das Kippmoment übersteigende Moment bewirkt). Folglich stellt sich aus dem Zusammenspiel der beiden Anschläge beiderseits der zu berakelnden Filterfläche (des Rakelbereichs) und der Charakteristik des Einphasensynchrongetriebemotors eine Pendelbewegung der Rakel zwischen den beiden Anschlägen ein. Die Geschwindigkeit der Bewegung der Rakel zwischen den beiden Umkehrpunkten kann konstant sein. Somit kann eine übermäßige Abnutzung an einzelnen Stellen der Filterfläche vermieden werden. Der Einphasensynchronmotor kann ein Polpaar aufweisen. Somit kann beispielsweise derselbe Motor verwendet werden wie er auch bei einer Laugenpumpe zum Einsatz kommen kann. Dadurch können Herstellungskosten gespart werden. Ferner kann der Einphasensynchronmotor 3 bis 6 Polpaare aufweisen. Somit kann ein einfacher und effektiver Motor bereitgestellt werden. Eine optimierte Effektivität kann beispielsweise beim Vorsehen von 3 Polpaaren erreicht werden.

Ferner können die Endpunkte der Pendelbewegung (Wendepunkte der Rakelbewegung) von der Lage der beiden Anschläge abhängen sein und sich mit diesen verschieben. Somit kann sich die Amplitude der Rakelbewegung nach Betrag und Lage in Abhängigkeit der Position der Anschläge ändern.

Gemäß einem Aspekt der vorliegenden Erfindung können die beiden Anschläge, die den Rakelbereich in einem Ausgangszustand definieren, jeweils an einer Seite des Rakelbereichs vorgesehen sein und als mechanische durch die Konstruktion des Filtersystems vorgegebene Anschläge ausgebildet sein. Beispielsweise können die Anschläge als von der Filterfläche vorstehende Stifte ausgebildet sein. Somit können von der Rakel zugeführte Partikel einfach einem jenseits des jeweiligen Stifts gebildeten Depot zugeführt werden.

Alternativ können die mechanischen Anschläge durch plattenartige Elemente wie eine Teil eines Gehäuses des Filtersystems oder einer Wand des Filtersystems gebildet sein. Durch die Pendelbewegung der Rakel können die ausgefilterten Partikel zu beiden Seiten der Rakel gegen die Anschläge geschoben und dort von der Rakel gegen den jeweiligen Anschlag gedrückt (beispielsweise komprimiert) werden. Die Rakel übt solange Druck auf die Partikel aus, bis das Kippmoment des Einphasensynchrongetriebemotors erreicht ist. Dann kann der Motor außer Tritt fallen und in der Gegenrichtung erneut anlaufen. Auf der anderen Seite des Rakelbereichs kann sich das Prozedere wiederholen. Mit den sich kumulierenden Partikeln können die Anschläge immer weiter verlagert werden, sodass der Rakelbereich bzw. die Amplitude der Oszillation immer kleiner werden. Dabei kann sich der Motor automatisch an die neue Betriebssituation (beispielsweise an die Füllung der Depots) anpassen. Dabei ist denkbar, dass dies so oft wiederholt wird, bis der Rakelbereich so klein ist, dass sich die Rakel nicht mehr bewegen kann.

Die kleiner werdende Amplitude (und damit der kleiner werdende Rakelbereich) verkleinert somit die zur Filterung des Fluid bereitstehende Filterfläche, sodass der effektive Strömungswiderstand des Filtersystems ansteigt. Mit anderen Worten kann bestimmt werden, bis zu welcher Amplitude das Filtersystem effektiv betrieben werden kann (insbesondere in Abhängigkeit der Leistung einer Pumpe, die dem Filtersystem das Fluid zuführt). Mit anderen Worten kann ein Grenzwert der Amplitude der Rakel bestimmt werden, bei dem der Filterwiderstand während der Filtration von dem Fluid zu groß wird. Daher kann das Filtersystem dazu ausgestaltet sein, die Amplitude der Rakel zu überwachen und bei Überschreiten eines oder mehrerer Grenzwerte eine Warnung an den Benutzer auszugeben. So dass der Benutzer dazu aufgefordert werden kann das Filtersystem zu warten oder auszutauschen.

Alternativ zum Einphasensynchronmotor kann auch ein Gleichstrommotor vorgesehen sein, wie im Folgenden dargelegt wird.

Vorzugsweise umfasst der Rakelantrieb einen Gleichstrommotor, eine Messeinrichtung zum Messen einer Geschwindigkeit und/oder eines Drehmoments des Rakelantriebs, und eine Steuereinheit, die dazu ausgestaltet ist, die Drehrichtung des Gleichstrommotors in Abhängigkeit der Geschwindigkeit und /oder des Drehmoments des Rakelantriebs zu ändern.

Mit anderen Worten kann der Antrieb der Rakel über einen Gleichstrommotor zusammen mit einem Messen des Drehmoments und/oder der Geschwindigkeit des Motors und/oder der Rakel bereitgestellt werden. Vorzugsweise kann das Drehmoment und/oder die Geschwindigkeit über bereits im System vorliegende Signale gemessen werden. So kann beispielsweise ein Kommutator des Gleichstrommotors eine dem Gleichstrom überlagerte Pulsation erzeugen, die sich in der Steuereinheit auskoppeln und messen lässt. Dazu kann die Steuereinheit dazu ausgestaltet sein, eine Pulsationsfrequenz zu erfassen. Diese Pulsationsfrequenz ist der Drehzahl des Motors direkt proportional, sodass sich durch Auswerten des Motorstroms die aktuelle Geschwindigkeit der Rakel bestimmen lässt. Somit kann die Steuereinheit basierend auf der Pulsationsfrequenz die Drehzahl des Motors und/die Geschwindigkeit der Rakelbewegung bestimmen.

Wenn die Rakel gegen einen Anschlag stößt (siehe oben), kann sich der Arbeitspunkt des Motors in Richtung langsamerer Geschwindigkeit verschieben bis zum vollständigen Stehenbleiben des Motors. Bei einem Unterschreiten eines Geschwindigkeitsgrenzwerts kann die Steuereinheit reagieren und den Motor umpolen. Der Motor und die über ein Getriebe angetriebene Rakel bewegen sich dann in die Gegenrichtung. Am anderen Ende des Rakelbereichs wiederholt sich das Spiel mit umgekehrten Vorzeichen. Somit kann genau wie oben sichergestellt werden, dass der Rakelbereich variabel ist und sich somit das Filtersystem an die derzeitigen Betriebsbedingungen anpassen kann.

Zusätzlich oder alternativ kann als weiteres Signal zum Bestimmen des Drehmoments und/oder der Geschwindigkeit des Antriebs die Höhe des Motorstroms durch die Steuereinheit genutzt werden. Der Motorstrom gibt bei bekannter Motorkennlinie Auskunft über das dem Motor abverlangte Drehmoment. Hierbei kann das Überschreiten eines Grenzwerts von der Steuereinheit als Auflaufen der Rakel auf einen Anschlag interpretiert werden und als Umschaltsignal für die Drehrichtung des Motors genutzt werden. Somit kann genau wie oben die oszillierende Bewegung der Rakel erreicht werden. Ferner kann sichergestellt werden, dass der Rakelbereich abhängig von den Betriebsbedingungen in dem Filtersystem variabel ist.

Zusätzlich oder alternativ kann zumindest ein weiterer Sensor in dem Filtersystem vorgesehen sein, um geeignete Umschaltpunkte des Motors zu detektieren. Beispielsweise kann ein Gleichstrommotor mit eingebautem Tachogenerator zum Rückkoppeln der Drehgeschwindigkeit vorgesehen sein. Ferner kann auch ein Sensor vorgesehen sein, der direkt die Kraft zwischen Rakel und einem Anschlage messen kann. Beispielsweise kann die Rakel einen Drucksensor umfassen.

Der Umschaltpunkt, bei dem der Gleichstrommotor seine Drehrichtung ändert, kann anstatt auf dem Drehmoment basierend auch auf einem Drehwinkel basierend bestimmt werden. Dazu kann die Steuereinheit dazu ausgestaltet sein, die Positionen der Rakel zu erfassen, an denen sich die Rakel nicht weiterbewegen kann (d.h. wenn die Rakel an einem Anschlag anstößt). Eine sehr einfache Lösung dazu wäre beispielsweise durch einen oder zwei Magneten auf einem bewegten Teil des Motors und einem Lesekontakt im Stator. Somit kann die Steuereinheit feststellen, wenn eine Drehung des Motors verhindert oder behindert wird und daraufhin die Drehrichtung des Motors ändern.

Der Rakelantrieb kann verschiedenartig ausgestaltete Motoren zum oszillierenden Bewegen der Rakel aufweisen. Dabei kann der Motor dazu ausgestaltet sein, eine Bewegungsrichtung der Rakel bei Auflaufen auf einen Anschlag (d. h. bei einem Entstehen eines bestimmten Widerstands an der Rake) umzukehren. Dabei kann beispielsweise die Drehrichtung des Motors umgekehrt werden. Ferner kann die Steuereinheit dazu ausgestaltet sein, eine Oszillationsamplitude der Rakel in Abhängigkeit der Anschläge anzupassen, sodass sich der Rakelbereich verringert. Dazu kann die Steuereinheit Daten über die Oszillationsamplitude, Oszillationsfrequenz und/oder Drehmoment direkt oder indirekt erfassen und auswerten und den Motor basierend auf diesen Daten steuern.

Bei den zuvor erwähnten Ausführungsformen mit dem Gleichstrommotor und dem Einphasensynchrongetriebemotor kann ein Filtersystem mit einfacher Hardware und sehr geringem Steueraufwand zum Erzeugen einer Oszillationsbewegung mit abnehmender Amplitude einfach bereitgestellt werden.

Vorzugsweise umfasst das Filtersystem einen Motor zur Erzeugung einer Drehenergie, und ein Getriebe, insbesondere einen Kurbelantrieb, das dazu ausgestaltet ist, die Drehenergie des Motors so auf die Rakel zu übertragen, dass sich die Rakel oszillierend über den Rakelbereich der Filterfläche bewegt, wobei das Getriebe eine Rutschkupplung und/oder ein elastisches Element aufweist, sodass der Rakelbereich eine variierende Größe aufweist.

Mit anderen Worten kann bei der vorliegenden Ausführungsform der Motor permanent und kontinuierlich in einer Richtung betrieben werden. Dabei kann die Drehenergie des Motors durch das Getriebe in eine oszillierende Bewegung der Rakel umgesetzt werden. Der Rakelbereich (d. h. die Amplitude der Rakel) kann auf einen kleinen Bereich im Vergleich zu der Filterfläche beschränkt sein, sodass bereits im Ausgangszustand außerhalb des Rakelbereichs Platz für zumindest ein Depot gebildet ist. Die ausgefilterten Partikel können dann von der oszillierenden Rakel sukzessive in das Depot verschoben werden. Die jeweils neu hinzukommenden Partikel können dann die schon vorhandenen Partikel tiefer in das Depot hineinverschieben und/oder diese dort komprimieren. Der Prozess kann solange fortlaufen, bis das Depot soweit gefüllt ist, dass die komprimierten Partikel bis in den Rakelbereich hineinreichen. In diesem Fall können die in den Rakelbereich hinreichenden Partikel Anschläge bilden, gegen die die Rakel bei ihrer oszillierenden Bewegung anstoßen kann.

Gemäß einem Aspekt der vorliegenden Erfindung kann eine abnehmende Oszillationsamplitude dadurch erreicht werden, dass das Getriebe eine Rutschkupplung und/oder ein elastisches Element aufweist (beispielsweise eine Feder). Dadurch kann die von dem Motor abgegeben Energie konstant sein, aber durch das Getriebe nicht vollständig in die von der Rakel ausgeführte Bewegung umgesetzt werden. So kann das Getriebe dafür sorgen, dass sich die Rakelbewegung an sich ändernde Randbedingungen anpasst, so dass der Rakelbereich verkleinert werden kann. Dadurch kann eine besonders einfache Steuerung erreicht werden, da der Motor nur in einer Richtung betrieben werden muss. Der auf die Rakel wirkende Widerstand, bei dem sich die Rakel nicht weiter in eine vorgegebene Bewegungsrichtung bewegt, kann dabei durch das elastische Element und/oder die Rutschkupplung definiert werden.

Jeder der obigen Motoren des Antriebssystems kann eine Leistung im Bereich von 3 bis 10 Watt aufweisen. Damit kann eine zufriedenstellende mechanische Reinigungsleistung durch die Rakel erreicht werden. Vorzugsweise weist der Motor des Antriebssystems eine Leistung von ungefähr 5 Watt auf. Es wurde herausgefunden, dass bei dieser Leistung das optimale Verhältnis zwischen Reinigungsleistung und Kompression der Partikel durch die Rakel erreicht werden kann. Die Geschwindigkeit der Rakel kann dabei vier Oszillationen pro Minute aufweisen. Die Motoren und/oder angeschlossene Getriebe können dementsprechend ausgestaltet sein, um diese Geschwindigkeit der Rakel sicherzustellen. Diese Geschwindigkeit sorgt für eine ausreichende Reinigung der Filterfläche, so dass ein übermäßiger Anstieg des hydraulische Widerstands in dem Filtersystem vermieden werden kann. Somit kann die Pumpe in dem wasserführenden Haushaltsgerät geschont werden.

Vorzugsweise weist das Filtersystem ferner einen Sensor auf, der dazu ausgestaltet ist, Informationen über den Betrieb der Rakel zu erfassen, insbesondere eine Amplitude der Rakel.

Der Sensor kann beispielsweise ein Wegsensor sein, der die Bewegung der Rakel erfassen (z.B. messen) kann. Beispielsweise kann der Sensor an einer Antriebswelle angeordnet sein. Damit können sich Lagedaten der Rakel ermitteln lassen, wie beispielsweise die maximale Amplitude der Rakel und/oder die derzeitige Position der Rakel. Sind diese Daten bekannt kann die Steuereinheit damit einen Füllungsgrad des zumindest einen Depots bestimmen. Diese Informationen können für einen Nutzer bereitgestellt werden und/oder in anderen Prozessen des wasserführenden Haushaltsgeräts genutzt werden. Beispielsweise kann ein etwaig in Kürze anstehender Filterwechsel oder eine Reinigung des Filters angezeigt werden. Falls das Filtersystem in einem internetfähigen wasserführenden Haushaltsgerät verbaut ist, können diese Informationen auch über das Internet weitergeleitet werden und beispielsweise verwendet werden, um automatisch einen neuen Filter zu bestellen.

Die oszillierende Bewegung der Rakel kann auf einer gekrümmten Bewegungsbahn erfolgen oder auch in einer linearen (d.h. geraden) Bewegungsbahn. Beispielsweise kann ein Getriebe zur Umsetzung einer Drehbewegung eines Motors in eine lineare Bewegung genutzt werden. Vorzugsweise kann dabei eine Schraubenspindel oder ein Antriebsriemen zum Einsatz kommen. Die lineare Bewegung der Rakel ist insbesondere vorteilhaft bei der Verwendung von zylindrischen Filterflächen.

Der Rakelbereich kann sich mit dem Drehpunkt der Rakel auf einer ebenen Fläche befinden. In diesem Fall kann sich die Rakel scheibenwischerartig über den Rakelbereich bewegen. Dabei kann eine Drehachse der Rakel (die Achse die sich durch den Drehpunkt erstreckt und um die sich die Rakel bewegt) orthogonal zu dem Rakelbereich ausgerichtet sein. Hierbei kann der Filterbereich (und auch der Rakelbereich) besonders einfach ausgestaltet sein, da dieser sich in einer Ebene erstreckt.

Alternativ kann sich der Rakelbereich parallel zu der Drehachse der Rakel erstrecken. Hierbei kann sich der Rakelbereich beispielsweise auf einem zylindrischen Filter befinden, wobei die Drehachse durch die Symmetrieachse des Filters Verläuft. Mit anderen Worten kann die Filterfläche auf einem zylindrischen Gestell oder ähnlichem aufgespannt sein, so dass der zylindrische Filter gebildet ist. Ferner kann bei dem zylindrischen Filter ein mechanischer Anschlag für die Rakel parallel zu der Drehachse der Rakel auf der Filterfläche angeordnet sein. Darüber hinaus kann der Filter als ein Halbzylinder gebildet sein. Dies eignet sich besonders für Bereiche, in denen nur sehr wenig Platz für das Filtersystem vorhanden ist, wie beispielsweise in einer Einspülschale einer Waschmaschine. Ferner kann ein zylindrisches Gehäuse auch durch eine sich linear bewegende Rakel abgerakelt werden. Dabei kann die Rakel eine scheibenartige Form aufweisen und das Depot und/oder ein mechanischer Anschlag können durch die Deckflächen des Zylinders gebildet sein. Vorzugsweise kann die Rakel mit einer axial durch den Zylinder verlaufenden Gewindestange bewegt werden.

Gemäß einem Aspekt der vorliegenden Erfindung sind mehr als eine Rakel in dem Filtersystem vorgesehen. Beispielsweise können zwei, drei oder mehr Rakeln in dem Filtersystem angeordnet sein. Dabei kann jede Rakel ihren eigenen Rakelbereich haben. Die verschiedenen Rakelbereiche können im Ausgangszustand unmittelbar aneinander angrenzen (sich aber nicht überschneiden). Ferner kann die Bewegungen der Rakeln synchronisiert sein, so dass bei zwei aneinander angrenzende Rakelbereiche, zwei benachbarte Rakeln gleichzeitig an demselben Wendepunkt sind, so dass Partikel zwischen den Rakeln zusammengedrückt bzw. komprimiert werden können. Zudem ist denkbar, dass mehrere Rakeln ein gemeinsames Depot nutzen und von unterschiedlichen Seiten Partikel dem Depot zuführen. Dadurch kann eine effektive Reinigung der Filterfläche und Sammlung der Partikel erreicht werden.

Ein Depot, dem ausgefilterte Partikel zugeführt werden können, kann an nur einer Seite eines Rakelbereichs angeordnet sein. Dabei kann die Rakel so ausgestaltet sein, dass sie nur einer Seite des Rakelbereichs Partikel zuführen kann. Mit anderen Worten kann die Rakel als eine einseitig wirkende Rakel ausgestaltet sein. Dies kann beispielsweise durch eine Rakel mit einem Gelenk oder einer elastischen Rakel mit Schrägstellung (auflaufend vs. ablaufend) realisiert werden. Dies bietet den Vorteil, dass Partikel nur an einer Position (nur ein Depot) in dem Filtersystem angesammelt werden. Dies erleichtert die Entnahme der Partikel. Ferner kann ein einzelnes Depot vorgesehen sein, in dem eine Pumpe, die dem Filtersystem Wasser zuführen kann, getaktet betrieben wird. Dabei kann sich die Rakel in dem Rakelbereich an einer von dem Depot entfernten Position befinden. Dann kann der Volumenstrom eingeschaltet werden, sodass dem Filtersystem Fluid zugeführt wird. Die Partikel werden aus dem Fluid ausgefiltert und sammeln sich auf der Filterfläche. Wenn der Widerstand für den Volumenstrom durch die zunehmende Verstopfung des Filters einen Grenzwert unterschreitet, kann die Pumpe ausgeschaltet werden und die Rakel aktiviert werden. Dabei kann die Rakel über den Rakelbereich auf das Depot zufahren, wodurch die ausgefilterten Partikel von dem Rakelbereich in das Depot verschoben werden. Die Rakel kann dann zurück in die Ausgangsposition verfahren werden oder an der Stelle verbleiben. Anschließend kann die Pumpe erneut aktiviert werden, sodass dem Filtersystem wieder Fluid zugeführt wird. Der Zyklus kann endlos wiederholt werden. Dadurch können die Partikel auf nur einer Seite des Rakelbereichs gesammelt werden, wodurch das System technisch einfacher ausgestaltet sein kann und sich eine Bedingung und Wartung vereinfachen kann.

Das Vorsehen eines Depots nur an einer Seite des Rakelbereichs kann insbesondere Vorteile bei der Entnahme der Partikel aus dem Filtersystem darstellen. Beispielsweise ist es nicht nötig, dass der Benutzer in das Innere des Filters vordringen muss oder das gesamte Filtersystem auswechseln muss. Die Filterfläche kann zumindest genau so groß sein wie der Rakelbereich. Vorzugsweise ist die Filterfläche aber größer als der Rakelbereich. Vorzugsweise ist die Filterfläche zumindest doppelt so groß wie der Rakelbereich. Dadurch kann eine ausreichende Fläche für ein Depot bereitgestellt werden, sodass bei einem Komprimieren der Partikel in dem Depot das in den Partikeln befindliche Wasser zuverlässig abgeführt werden kann.

Die oszillierende Bewegung verhindert, dass Partikel von der Rakel längere Zeit über die Filterfläche geschoben werden und dass die Filterfläche dadurch beschädigt wird. Im Stand der Technik besteht diese Gefahr insbesondere bei schraubenförmigen Abstreifern, die sich in einem zylindrischen Filter bewegen. Dies bietet den Vorteil, dass insbesondere bei ausgefilterten abrasiven Partikeln (wie beispielsweise Kalkstückchen oder Sand) die Filterfläche nicht beschädigt wird. Damit lässt sich eine wesentlich einfachere und kostengünstigere Filterfläche (vorzugsweise eine Gaze-Membran aus Kunststoff) einsetzen. Ferner ergeben sich durch die oszillierende Rakelbewegung auf beiden Seiten des Rakelbereichs Partikeldepots, in denen sich die Partikel ansammeln. Diese Depots können im Vergleich zum Filtergehäuse ein relativ großes Volumen aufweisen, das insbesondere kaum Restriktionen an die Form auferlegt und daher großen Spielraum bei der Gestaltung des Filtersystems bietet. Der Antrieb kann beispielsweise durch den Einphasensynchrongetriebemotor sehr einfach bereitgestellt werden, da sich die Pendelbewegung bei geeigneter Auslegung automatisch ergibt. Insbesondere kann sich die Amplitude der Pendelbewegung einem Füllgrad der oder des Depots anpassen. Dabei ist keine bzw. eine nur sehr einfache Steuerung notwendig, da der Antrieb die Pendelbewegung selbstständig bzw. automatisch ausführen kann, insbesondere auch unter variierender Amplitude der Pendelbewegung (wie beispielsweise oben bei dem Einphasensynchrongetriebemotor beschrieben). Ferner ist keine zusätzliche Sensorik (wie beispielsweise bei dem oben beschriebenen Gleichstrommotor) notwendig. Durch die automatisch angepasste Amplitude kann ein Gehäuse des Filtersystems faktisch komplett mit ausgefilterten Partikeln gefüllt werden, wodurch eine optimale Ausnutzung des gegebenen Bauraums realisiert werden kann. Ferner kann das Filtersystem sehr kompakt und technisch einfach ausgestaltet sein, insbesondere, wenn sich der Rakelbereich in Draufsicht auf eine 180° Schwenkwinkel definiert und somit nur ein einzelnes Depot vorgesehen sein kann.

Gemäß einem weiteren Aspekt der vorliegenden Erfindung wird ein wasserführendes Haushaltsgerät bereitgestellt, wobei das Haushaltsgerät einen Behandlungsraum, eine Pumpe zum Abpumpen von Fluid aus dem Behandlungsraum und ein Filtersystem gemäß einer der obigen Ausgestaltungen aufweist. Das aus dem Behandlungsraum abgepumpte Fluid wird vollständig oder teilweise dem Filtersystem zugeführt.

Das wasserführende Haushaltsgerät kann beispielsweise eine Waschmaschine, ein Geschirrspüler oder ein Trockner sein.

Gemäß einem weiteren Aspekt der der vorliegenden Erfindung wird ein Verfahren zum Filtern eines Fluids in einem wasserführenden Haushaltsgerät bereitgestellt, wobei das Verfahren die folgenden Schritte umfasst: Hindurchleiten von zu filterndem Fluid durch eine Filterfläche, um Partikel aus dem Fluid auszufiltern, oszillierendes Abrakeln eines Filterbereichs der Filterfläche, um Partikel von dem Rakelbereich zu entfernen und einem Depot zuzuführen, wobei eine Größe des Rakelbereichs von einer Partikelmenge in dem Depot abhängig ist, sodass der Rakelbereich eine variable Größe aufweist, wobei eine Bewegungsrichtung der Rakel (2) durch einen Rakelantrieb umgekehrt wird, wenn ein vorbestimmter Widerstand an der Rakel (2) auftritt.

Die für die Vorrichtung genannten Ausgestaltungen und Vorteile gelten in analoger Weise auch für das Verfahren.

Im Folgenden wird die vorliegende Erfindung anhand einiger Ausführungsformen und den beigefügten Zeichnungen im Detail beschrieben:
In den Figuren zeigt:
**Fig. 1** eine schematische Darstellung eines Filtersystems gemäß einer Ausführungsform der vorliegenden Erfindung,
**Fig. 2** einen Querschnitt des in Fig. 1 dargestellten Filtersystems gemäß er Ausführungsform der vorliegenden Erfindung,
**Fig. 3A** eine schematische Darstellung des Filtersystems gemäß der Ausführungsform in einem ersten Betriebszustand,
**Fig. 3B** das Filtersystem gemäß der Ausführungsform der vorliegenden Erfindung in einem zweiten Betriebszustand,
**Fig. 3C** das Filtersystem gemäß der Ausführungsform der vorliegenden Erfindung in einem dritten Betriebszustand,
**Fig. 4A** ein Diagramm einer Kennlinie eines Einphasensynchronmotors gemäß einer Ausführungsform der vorliegenden Erfindung,
**Fig. 4B** die in Fig. 4A dargestellte Kennlinie mit der Charakteristik eines Motors gemäß einer Ausführungsform der vorliegenden Erfindung,
**Fig. 5** mehrere schematische Darstellungen von Filtersystemen gemäß verschiedener Ausführungsformen der vorliegenden Erfindung,
**Fig. 6** mehrere schematische Darstellungen von Filtersystemen gemäß Ausführungsformen der vorliegenden Erfindung,
**Fig. 7** eine schematische Darstellung eines Filtersystems gemäß einer weiteren Ausführungsform der vorliegenden Erfindung, und
**Fig. 8** ein Filtersystem gemäß einer weiteren Ausführungsform der vorliegenden Erfindung.

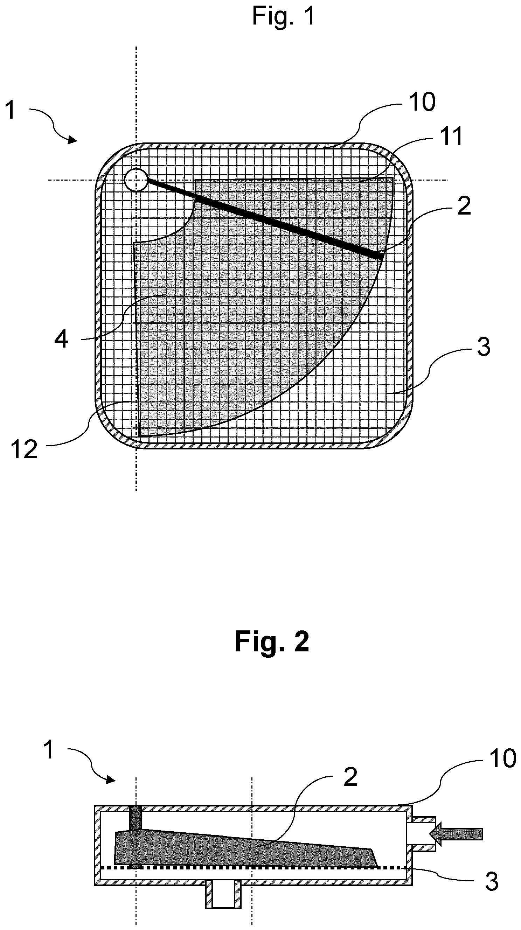

**Fig. 1** ist eine schematische Draufsicht auf ein Filtersystem 1 gemäß einer Ausführungsform der vorliegenden Erfindung. Das Filtersystem 1 umfasst ein Gehäuse 10 in dem die Filterfläche 3 und eine Rakel 2 angeordnet sind. Die Rakel 2 ist dazu ausgestaltet, einen Rakelbereich 4 des Filterbereichs 3 zu reinigen. Die Rakel 2 kann dabei oszillierend über den Rakelbereich 4 bewegt werden. Der Rakelbereich 4 ist ein Bereich auf der Filterfläche 3. Bei der vorliegenden Ausführungsform hat die Rakelfläche 3 die Form eines Viertel-Ringsegments. Die Rakel 2 ist dabei an einem Rakelarm befestigt. Die Rakel 2 ist um eine Drehachse herum drehbar, wobei die Drehachse senkrecht auf der Filterfläche 3 steht. Die Rakel 2 ist ferner so mit der Filterfläche 3 in Kontakt, dass aus einem Fluid ausgefilterte Partikel 9 von der Rakel erfasst werden und von der Filterfläche 3 verlagert bzw. verschoben werden. Mit anderen Worten verschiebt die Rakel 2 die Partikel 9 von dem Rakelbereich 4 (mechanische Reinigung des Rakelbereichs 4). Bei der vorliegenden Ausführungsform ist die Filterfläche 3 größer als der Rakelbereich 4. Die Rakel 2 bewegt sich oszillierend über den Rakelbereich 4. Die Positionen, an denen die Rakel 2 ihre Bewegungsrichtung ändert (d.h. die Wendepunkte der Rakel 2) begrenzen den Rakelbereich 4 auf der Filterfläche 3. Bei der vorliegenden Ausführungsform ist an jeder Position, an der die Rakel 2 ihre Bewegungsrichtung ändert ein Anschlag vorgesehen (d.h. ein erster Anschlag 11 oder ein zweiter Anschlag 12). Die Anschläge 11, 12 sind mechanische Anschläge, mit denen die Rakel 2 in Kontakt kommt, wenn in dem Filtersystem keine Partikel vorhanden sind.

Fig. 2 ist ein Querschnitt durch das in Fig. 1 dargestellte Filtersystem 1. In Fig. 2 ist erkennbar, dass das Gehäuse 10 einen Zulauf (siehe Pfeil) aufweist, mittels welchem dem Filtersystem 1 zu filterndes Fluid zugeführt wird. Das dem Filtersystem 1 zugeführte Fluid wird durch die Filterfläche 3 gefiltert und anschließend durch einen Auslass (in Fig. 2 unten dargestellt) aus dem Filtersystem 1 ausgetragen. Somit können aus dem Fluid ausgefilterte Partikel 9 (nicht dargestellt in Fig. 1 und 2) in dem Filtersystem 1 zurückgehalten werden.

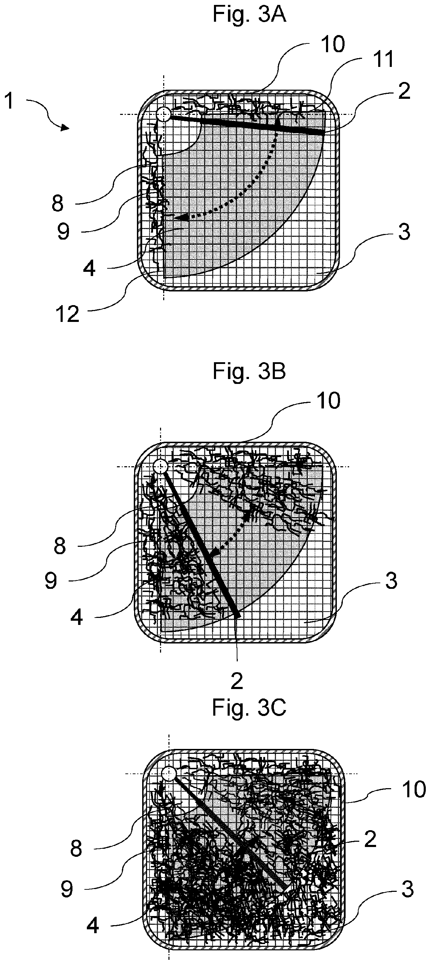

Fig. 3A ist eine schematische Darstellung des in Fig. 1 dargestellten Filtersystems 1. In der Darstellung in Fig. 3A ist das Filtersystem 1 bereits eine Zeit in Betrieb (erste Betriebsposition) und hat bereits Partikel 9 aus dem Fluid ausgefiltert. Durch die oszillierende Bewegung der Rakel 2 sind die Partikel 9 von dem Rakelbereich 4 entfernt und einem Depot 8 auf der Filterfläche 3 zugeführt worden. Das Depot 8 ist an den Positionen gebildet, an denen die Rakel 2 ihre Bewegungsrichtung ändert (d.h. an den Wendepunkten der Rakel 2). Mit anderen Worten werden Partikel 9 durch die Rakel 2 zu dem ersten Anschlag 11 und dem zweiten Anschlag 12 befördert. Dabei definieren die Anschläge 11, 12 den Rakelbereich. Sind so viele Partikel 9 aus dem Fluid ausgefiltert und von der Rakel 2 in das jeweilige Depot 8 befördert, dass sie die Anschläge 11, 12 überragen, so bilden die Partikel 9 Anschläge, die den Rakelbereich 4 begrenzen und damit definieren. Mit anderen Worten pendelt die Rakel 2 zwischen den in dem Depot 8 angeordneten Partikeln 9 hin und her (siehe Pfeil in Fig. 3A).

Fig. 3B verdeutlicht diesen Zustand und ist eine schematische Darstellung des in Fig. 3A dargestellten Filtersystems 1 zu einem späteren Zeitpunkt während einem Betrieb des Filtersystems 1. Hierbei sind nun so viele Partikel 9 aus dem Fluid ausgefiltert, dass sich der Rakelbereich 4 verkleinert hat gegenüber dem in Fig. 3A dargestellten Zustand. Die Rakel 2 bewegt sich oszillierend in dem verkleinerten Rakelbereich 4 hin und her und führt weiter die ausgefilterten Partikel 9 dem Depot 8 zu.

Fig. 3C ist eine schematische Ansicht des in Fig. 3B dargestellten Filtersystems 1 zu einem späteren Betriebszeitpunkt. Hierbei sind nun so viele Partikel 9 aus dem Fluid ausgefiltert und von dem Rakelbereich 4 entfernt, dass stromaufwärts der Filterfläche 3 nahezu das gesamte Gehäuse 10 mit Partikel 9 angefüllt ist. Hierbei hat sich nun der Rakelbereich 4 auf ein Minimum reduziert, sodass die Rakel 2 sich kaum noch oszillierend bewegen kann und die Amplitude nahe null ist. Spätestens in diesem Zustand wird eine Warnung von dem Filtersystem 1 ausgegeben, dass Partikel 9 aus den Filtersystem 1 entfernt werden sollten oder das Filtersystem gewechselt werden sollte.

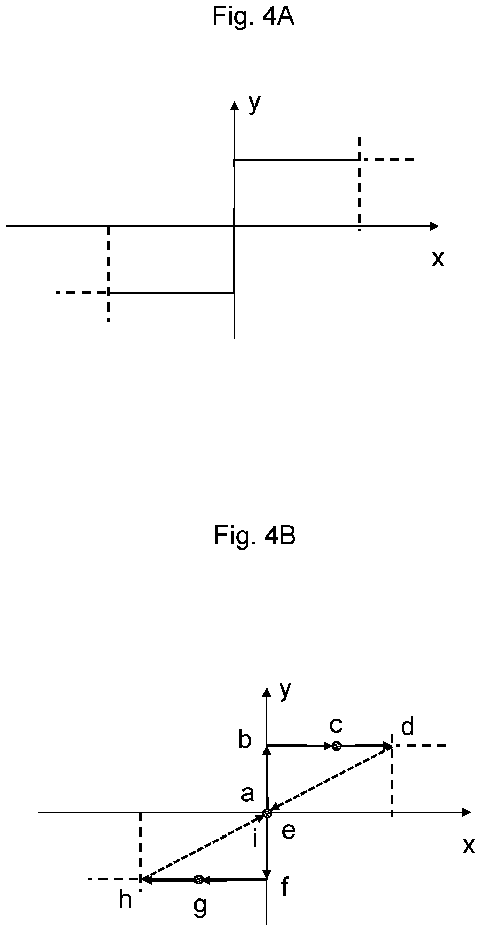

Fig. 4A zeigt ein Diagramm, bei dem die y-Achse die Drehzahl eines in dem Rakelantrieb umfassten Einphasensynchrongetriebemotors beschreibt und die x-Achse ein Drehmoment. Mit den durchgezogenen Linien ist eine Kennlinie des Einphasensynchrongetriebemotors eingezeichnet. Der Einphasensynchrongetriebemotor ist so mit der Rakel 2 gekoppelt, dass die Rakel 2 über den Rakelbereich 4 bewegt werden kann. In dem Diagramm in Fig. 4A ist die Drehzahl über der x-Achse eine positive Drehrichtung des Motors und unter der x-Achse eine negative Drehrichtung des Motors.

In Fig. 4B ist dasselbe Diagramm wie in Fig. 4A mit der Charakteristik des Einphasensynchrongetriebemotors dargestellt. Genauer gesagt ist der Bewegungszyklus des Motors dargestellt. Solange das so genannte Kippmoment des Motors nicht überschritten wird, stellt sich ein stabiler Arbeitspunkt ein. Wenn die Rakel 2 gegen einen Anschlag fährt (d. h. gegen einen Widerstand, der die Rakel daran hindert sich weiter in der bisherigen Richtung zu bewegen) wird das Kippmoment überschritten und ein Neuanlauf des Motors findet statt. Im Folgenden wird der Bewegungszyklus des Motors in Fig. 4B beschrieben: Nach dem Einschalten des Motors durch Anlegen der Versorgungsspannung (a), nämlich Wechselspannung mit 50 Hz, startet der Motor z. B. in einer positiven Drehrichtung, wobei die Startdrehrichtung sich zufällig ergibt. Der Motor erreicht im Rahmen von Getriebespiel und Elastizität im Antriebssystem die Zieldrehzahl innerhalb eines halben Zyklus der Wechselspannung (b) und dreht sich dann gleichmäßig weiter. Das System verspannt sich in Drehrichtung bis das Spiel auf null geht. Das Drehmoment des Motors wirkt auf die Rakel 2. Daher läuft die Rakel 2 in einer Richtung los. Der Arbeitspunkt des Motors pegelt sich auf den Widerstand der Rakel (c) ein. Wenn die Rakel 2 auf ein Hindernis stößt, wird dem Motor dadurch ein größeres Drehmoment abverlangt. Der Motor ist in der Lage ein Drehmoment nur bis zu dem Kippmoment (d) zu liefern. Durch Überschreiten des Kippmoments fällt der Rotor des Motors außer Tritt und Drehzahl und Drehmoment fallen rasch auf null ab (e). Die Versorgungsspannung liegt jedoch weiterhin am Motor an, weswegen der Rotor versucht dem Startormagnetfeld zu folgen und sich wieder auf eine synchrone Drehung einzufangen. Der Rotor oszilliert einige Male hin und her und fängt sich in der negativen Drehrichtung (entgegengesetzt der vorherigen Drehrichtung) ein. Da die vorherige Arbeitsrichtung (positive Drehrichtung) noch immer durch den Anschlag blockiert ist, kann der Motor nicht weiterlaufen, ohne das Kippmoment zu überschreiten. In der negativen Drehrichtung ist zunächst genügend Spiel im Antriebssystem, um den Rotor auf Zieldrehzahl zu beschleunigen (f) und den Arbeitspunkt in negativer Drehrichtung anzufahren (g). Schlägt die Rakel 2 in negativer Drehrichtung wieder an einen Anschlag an, wiederholt sich das Vorherige, indem das negative Kippmoment (h) überschritten wird und die Drehzahl und das Drehmoment wieder rasch auf null abfallen (i). Somit kann die oszillierende Bewegung der Rakel 2 bereitgestellt werden und der Rakelbereich 4 den jeweiligen Betriebsbedingungen angepasst werden (d.h. dessen Größe variable sein).

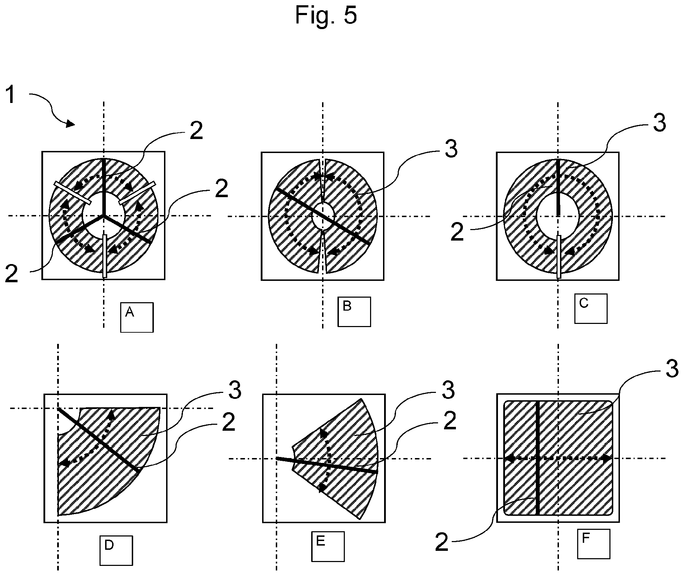

In Fig. 5 sind sechs verschiedene Ausführungsformen gemäß der vorliegenden Erfindung schematisch dargestellt. In der ersten in Fig. 5 dargestellten Abbildung (A) ist ein Filtersystem gezeigt, bei dem drei Rakeln 2 vorgesehen sind. Jede der Rakeln 2 ist dazu ausgestaltet, Partikel 9 von einem jeweils der Rakel 2 zugeordneten Rakelbereich 4 abzurakeln. Auch bei dieser Ausführungsform bewegen sich die Rakeln 2 oszillierend über den jeweiligen Rakelbereich 4. Die drei Rakelbereiche 4 bilden zusammen einen geschlossenen Ring. Mit anderen Worten ist in einem Ausgangszustand (d.h. ohne Partikel in dem Depot) der Anschlag eines Rakelbereichs auch gleichzeitig der Anschlag des angrenzenden Rakelbereichs 4. Die Rakeln 2 sind miteinander verbunden und werden gemeinsam durch einen Rakelantrieb 7 (nicht dargestellt) synchron angetrieben.

In der zweiten Fig. von Fig. 5 (B) ist ein Filtersystem 1 dargestellt, das zwei Rakelbereiche 4 aufweist. Jedem Rakelbereich 4 ist eine Rakel 2 zugeordnet. Auch bei dieser Ausführungsform sind die zwei Rakeln 2 miteinander verbunden. Die zwei Rakelbereiche 4 bilden auch hier einen geschlossenen Ring.

In der dritten in Fig. 5 dargestellten Fig. (C) ist ein ringförmiger Rakelbereich 4 dargestellt. In dem Rakelbereich 4 bewegt sich eine Rakel 2 oszillierend auf einer ringförmigen Bewegungsbahn. In einem Ausgangszustand (d. h., wenn keine Partikel 9 in dem Depot 8 vorgesehen sind) befinden sich der erste Anschlag 11 und der zweite Anschlag 12 an nahezu derselben Position. Die Anschläge verlagern sich auf voneinander weiter entfernte Positionen, sobald Partikel von der Rakel in dem Depot (d.h. an dem Wendepunkt der Rakel) abgelagert werden.

In der vierten in Fig. 5 dargestellten Fig. (D) ist der Rakelbereich 4 ein Ausschnitt eines ringförmigen Bereichs und eine Rakel 2 bewegt sich oszillierend über den Rakelbereich 4 (vgl. auch Fig. 1).

In der fünften in Fig. 5 dargestellten Fig. (E) beschreibt die Rakel 2 einen Rakelbereich 4, der ein Ausschnitt eines Ringsegments ist. Dabei ist der Winkelbereich, den die Rakel 2 zwischen den beiden Anschlägen 11, 12 zurücklegt kleiner als 90°.

In der sechsten in Fig. 5 dargestellten Fig. (F) bewegt sich eine Rakel 2 mit einer linearen (d.h. geraden) Bewegungsrichtung über den Rakelbereich 4. Hierbei wird die von dem Motor erlangte Drehkraft durch ein Gestänge und/oder ein Getriebe (nicht dargestellt) in eine lineare Bewegung umgesetzt.

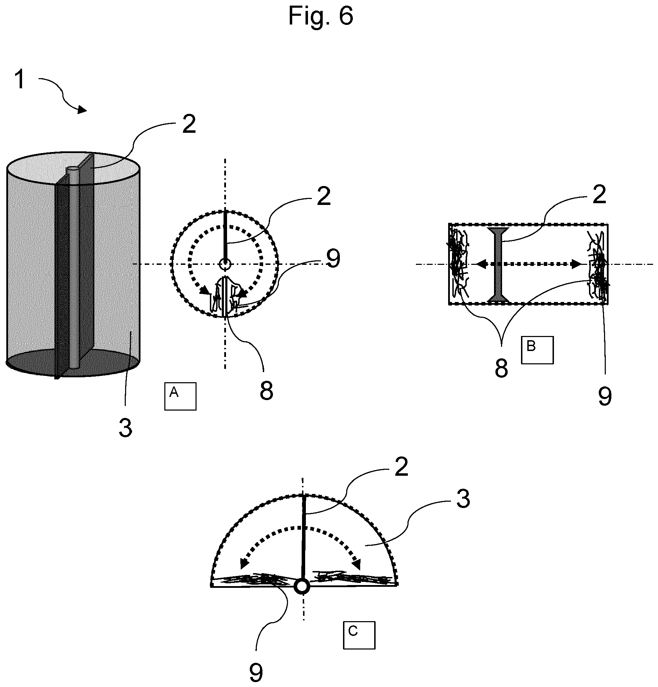

In Fig. 6 sind drei verschiedene Ausführungsformen gemäß der vorliegenden Erfindung schematisch dargestellt. Die erste in Fig. 6 dargestellte Ausführungsform (A) hat ein zylindrisches Gehäuse, das die Filterfläche bildet. Die Rakel 2 rakelt dabei die innere Mantelfläche des zylindrischen Gehäuses ab. In der Draufsicht hat da Gehäuse eine kreisrunde äußere Form (siehe Figur daneben). Dabei bildet in einem Ausgangszustand (d.h. keine Partikel sind in dem Filtersystem 1) die gesamte Mantelfläche des Filterelements den Rakelbereich 4. In der Draufsicht in der ersten Fig. von Fig. 6 ist zudem in dem Depot 8 eine Ansammlung von Partikeln 9 dargestellt. Bei der zweite in Fig. 6 dargestellte Fig. (B) weist der Filter ebenfalls eine zylindrische Form auf, in dem die Rakel 2 sich linear hin und her bewegt. Die Rakel 2 hat in diesem Fall als eine runde Scheibe ausgebildet und bewegt sich von der einen Grundfläche des zylindrischen Filters zu der Deckfläche des zylindrischen Filters. Mit anderen Worten ist jeweils ein Depot 8 an der Grundfläche des zylindrischen Filters und an der Deckfläche des zylindrischen Filters gebildet. Zusätzlich ist in der zweiten Fig. von Fig. 6 eine Ansammlung von Partikeln 9 in dem jeweiligen Depot 8 (d. h. links und rechts der Rakel) dargestellt.

Bei der dritten in Fig. 6 dargestellten Fig. (C) weist der Filter ebenfalls eine zylindrische Form auf. Die Rakel 2 rakelt jedoch bei ihrer oszillierenden Bewegung einen Winkelbereich von 180° ab. Mit anderen Worten befinden sich der erste Anschlag 11 und der zweite Anschlag 12 auf derselben virtuellen Geraden. Somit bewegt sich die Rakel 2 nur teilweise über die Mantelfläche des zylindrischen Filters (bei der vorliegenden Ausführungsform über die Hälfte der Mantelfläche).

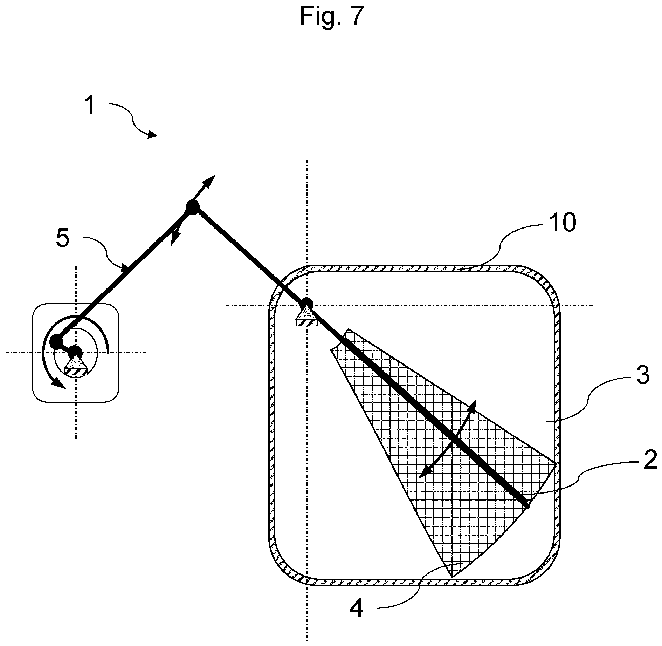

In Fig. 7 ist eine weitere Ausführungsform der vorliegenden Erfindung schematisch dargestellt. Bei der vorliegenden Ausführungsform wird ein Kurbelantrieb 5 durch einen nicht dargestellten Motor angetrieben. Durch eine Übersetzung und Ausgestaltung des Kurbelantriebs 5 wird die Drehbewegung des Motors in eine oszillierende Hin- und Herbewegung der Rakel 2 überführt. Somit kann der Rakelbereich 4 in dem Gehäuse 10 des Filtersystems 1 oszillierend durch die Rakel 2 von Partikeln 9 befreit werden. Genauso wie bei den oben dargestellten Ausführungsformen kann hierbei ein Depot 8 für Partikel 9 angrenzend an den Rakelbereich 4 gebildet sein. Der Kurbelantrieb 5 umfasst eine Rutschkupplung und/oder ein elastisches Element, sodass die Amplitude und Lage der Oszillation von dem Motor zwar vorgegeben werden, aber von der Rakel 2 nicht vollständig ausgeführt werden muss. Dadurch kann der Rakelbereich 4 dynamisch verkleinert werden in Abhängigkeit der Position der jeweiligen Anschläge. Mit anderen Worten kann der Rakelbereich 4 kleiner werden, wenn die Menge an Partikeln 9 in den Depots 8 ansteigt.

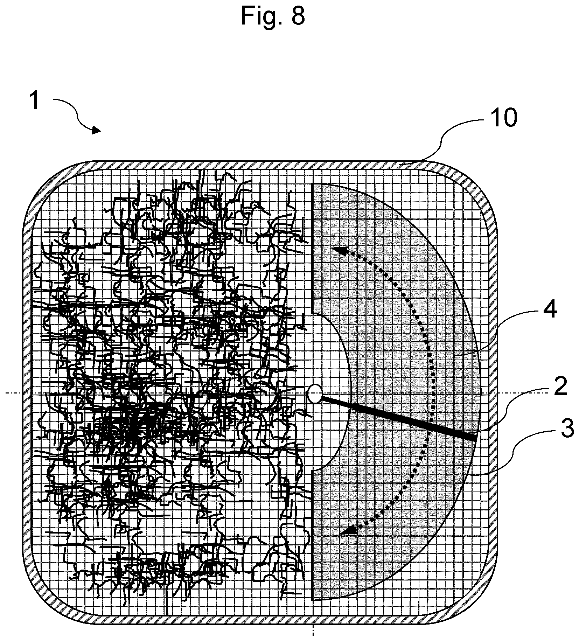

In Fig. 8 ist eine weitere Ausführungsform der vorliegenden Erfindung schematisch dargestellt. Die vorliegende Ausführungsform unterscheidet sich von der in Fig. 1 dargestellten Ausführungsform dadurch, dass der Rakelbereich sich über die Hälfte eines Ringsegments erstreckt. Mit anderen Worten überstreicht die Rakel 2 bei ihrem Weg von einem ersten Anschlag 11 zu einem zweiten Anschlag 12 einen Winkelbereich von 180°. Bei dieser Ausführungsform ist lediglich ein Depot 8 vorgesehen, dem von der Rakel 2 Partikeln 9 zugeführt werden. Auch hierbei kann sich der Rakelbereich 4 verkleinern, wenn das Depot 8 mit Partikeln 9 gefüllt ist.

### Bezugszeichenliste

- 1: Filtersystem
- 2: Rakel
- 3: Filterfläche
- 4: Rakelbereich
- 5: Kurbelantrieb
- 7: Rakelantrieb
- 8: Depot
- 9: Partikel
- 10: Gehäuse
- 11: erster Anschlag
- 12: zweiter Anschlag

## Patentansprüche

1. Filtersystem (1) mit einer Rakel (2) zur Reinigung einer Filterfläche (3) in einem wasserführenden Haushaltsgerät, wobei das Filtersystem (1) umfasst:
eine Filterfläche (3), die dazu ausgestaltet ist, Partikel (9) aus einem Fluid zu filtern,
eine Rakel (2), die dazu ausgestaltet ist, einen Rakelbereich (4) der Filterfläche (3) abzurakeln, um den Rakelbereich (4) von Partikeln (9) zu befreien und die Partikel (9) einem Depot (8) zuzuführen, und
einen Rakelantrieb, der dazu ausgestaltet ist, die Rakel (2) oszillierend über den Rakelbereich (4) der Filterfläche (3) zu bewegen,
wobei eine Größe des Rakelbereichs (4) variabel ist, insbesondere in Abhängigkeit von einer Menge abgerakelter Partikel (9), **dadurch gekennzeichnet, dass** der Rakelantrieb dazu ausgestaltet ist, eine Bewegungsrichtung der Rakel (2) umzukehren, wenn ein vorbestimmter Widerstand an der Rakel (2) auftritt.

2. Filtersystem (1) gemäß Anspruch 1, wobei die Größe des Rakelbereichs (4) von einer Partikelmenge (9) in dem Depot (8) abhängig ist, und wobei das Depot (8) vorzugsweise direkt an zumindest eine Seite des Rakelbereichs (4) angrenzt.

3. Filtersystem (1) gemäß einem der vorhergehenden Ansprüche, wobei der Rakelantrieb dazu konfiguriert ist, die Rakel (2) synchron zu einem Betrieb einer Pumpe, die dazu ausgestaltet ist, das Fluid dem Filtersystem (1) zuzuführen, zu bewegen.

4. Filtersystem (1) gemäß einem der vorhergehenden Ansprüche, wobei der Rakelantrieb einen Einphasensynchrongetriebemotor umfasst.

5. Filtersystem (1) gemäß einem der Ansprüche 1 bis 3, wobei der Rakelantrieb umfasst:
einen Gleichstrommotor,
eine Messeinrichtung zum Messen einer Geschwindigkeit und/oder eines Drehmoments des Rakelantriebs, und
eine Steuereinheit, die dazu ausgestaltet ist, die Drehrichtung des Gleichstrommotors in Abhängigkeit der Geschwindigkeit und/oder des Drehmoments des Rakelantriebs zu ändern.

6. Filtersystem (1) gemäß einem der vorhergehenden Ansprüche, wobei der Rakelantrieb umfasst:
einen Motor zur Erzeugung einer Drehenergie, und
ein Getriebe (5), insbesondere einen Kurbelantrieb, das dazu ausgestaltet ist, die Drehenergie des Motors so auf die Rakel (2) zu übertragen, dass sich die Rakel (2) oszillierend über den Rakelbereich (4) der Filterfläche (3) bewegt,
wobei das Getriebe (5) eine Rutschkupplung und/oder ein elastisches Element aufweist, so dass der Rakelbereich (4) eine variable Größe aufweist.

7. Filtersystem (1) gemäß einem der vorhergehenden Ansprüche, wobei das Filtersystem (1) ferner einen Sensor umfasst, der dazu ausgestaltet ist, Informationen über den Betrieb der Rakel (2) zu erfassen, insbesondere eine Amplitude der Rakel.

8. Wasserführendes Haushaltsgerät, umfassend:
einen Behandlungsraum,
eine Pumpe zum Abpumpen von Fluid aus dem Behandlungsraum,
ein Filtersystem (1) gemäß einem der Ansprüche 1 bis 7,
wobei das aus dem Behandlungsraum abgepumpte Fluid vollständig oder teilweise dem Filtersystem zugeführt wird.

9. Verfahren zum Filtern eines Fluids in einem wasserführenden Haushaltsgerät, wobei das Verfahren die folgenden Schritte umfasst:
Hindurchleiten von zu filterndem Fluid durch eine Filterfläche (3), um Partikel (9) aus dem Fluid auszufiltern,
oszillierendes Abrakeln eines Rakelbereichs (4) der Filterfläche (3), um die Partikel (9) von dem Rakelbereich (4) zu entfernen und einem Depot (8) zuzuführen,
wobei eine Größe des Rakelbereichs (4) von einer Partikelmenge in dem Depot (8) abhängig ist, so dass der Rakelbereich (4) eine variable Größe aufweist, wobei der eine Bewegungsrichtung der Rakel (2) durch einen Rakelantrieb umgekehrt wird, wenn ein vorbestimmter Widerstand an der Rakel (2) auftritt.

## Claims

1. Filter system (1) with a scraper (2) for cleaning a filter surface (3) in a waterconveying household appliance, wherein the filter system (1) comprises:
a filter surface (3) which is designed to filter particles (9) from a fluid,
a scraper (2), which is designed to scrape a scraper region (4) of the filter surface (3) in order to rid the scraper region (4) of particles (9) and to supply the particles (9) to a repository (8), and
a scraper drive, which is designed to move the scraper (2) in an oscillating manner over the scraper region (4) of the filter surface (3),
wherein a size of the scraper region (4) is variable, in particular as a function of a quantity of scraped particles (9), **characterised in that** the scraper drive is designed to reverse a direction of movement of the scraper (2) when a predetermined resistance occurs on the scraper (2).

2. Filter system (1) according to claim 1, wherein the size of the scraper region (4) is dependent on a quantity of particles (9) in the repository (8), and wherein the repository (8) preferably directly adjoins at least one side of the scraper region (4).

3. Filter system (1) according to one of the preceding claims, wherein the scraper drive is configured to move the scraper (2) in synchrony with an operation of a pump which is designed to supply the fluid to the filter system (1).

4. Filter system (1) according to one of the preceding claims, wherein the scraper drive comprises a single-phase synchronous gear motor.

5. Filter system (1) according to one of claims 1 to 3, wherein the scraper drive comprises:
a direct current motor,
a measuring facility for measuring a speed and/or a torque of a scraper drive, and
a control unit, which is designed to change the direction of rotation of the direct current motor as a function of the speed and/or the torque of the scraper drive.

6. Filter system (1) according to one of the preceding claims, wherein the scraper drive comprises:
a motor for generating rotational energy, and
a gear (5), in particular a crank drive, which is designed to transmit the rotational energy of the motor onto the scraper (2) so that the scraper (2) moves in an oscillating manner over the scraper region (4) of the filter surface (3),
wherein the gear (5) has a safety clutch and/or an elastic element so that the scraper region (4) has a variable size.

7. Filter system (1) according to one of the preceding claims, wherein the filter system (1) further comprises a sensor, which is designed to detect information about the operation of the scraper (2), in particular an amplitude of the scraper.

8. Water-conducting household appliance comprising:
a treatment chamber,
a pump for pumping fluid out of the treatment chamber,
a filter system (1) according to one of claims 1 to 7,
wherein the fluid pumped out of the treatment chamber is supplied entirely or partially to the filter system.

9. Method for filtering a fluid in a water-conducting household appliance, wherein the method comprises the following steps:
passing fluid to be filtered through a filter surface (3) in order to filter out particles (9) from the fluid,
oscillatory scraping of a scraper region (4) of the filter surface (3) in order to remove the particles (9) from the scraper region (4) and supply the same to a repository (8),
wherein a size of the scraper region (4) is dependent on a quantity of particles in the repository (8), so that the scraper region (4) has a variable size, wherein the one direction of movement of the scraper (2) is reversed by a scraper drive when a predetermined resistance occurs on the scraper (2).

## Revendications

1. Système de filtre (1) avec un racloir (2) pour le nettoyage d'une surface de filtre (3) dans un appareil ménager à circulation d'eau, dans lequel le système de filtre (1) comprend :
une surface de filtre (3) aménagée afin de filtrer les particules (9) d'un fluide,
un racloir (2) aménagé afin de racler une zone de raclage (4) de la surface de filtre (3) afin de libérer la zone de raclage (4) des particules (9) et de faire parvenir les particules (9) à un dépôt (8), et
un entraînement de racloir aménagé afin de déplacer le racloir (2) de façon oscillante sur la zone de raclage (4) de la surface de filtre (3),
dans lequel une taille de la zone de raclage (4) est variable, en particulier en fonction d'une quantité de particules raclées (9), **caractérisé en ce que** l'entraînement de racloir est aménagé afin d'inverser un sens de déplacement du racloir (2) lorsqu'une résistance prédéterminée se manifeste au niveau du racloir (2).

2. Système de filtre (1) selon la revendication 1, dans lequel la taille de la zone de raclage (4) dépend d'une quantité de particules (9) dans le dépôt (8) et dans lequel le dépôt (8) est de préférence directement contigu à au moins un côté de la zone de raclage (4).

3. Système de filtre (1) selon l'une des revendications précédentes, dans lequel l'entraînement de racloir est configuré afin de déplacer le racloir (2) de façon synchrone par rapport à un entraînement d'une pompe aménagée afin de faire parvenir le fluide au système de filtre (1).

4. Système de filtre (1) selon l'une des revendications précédentes, dans lequel l'entraînement de racloir comprend un motoréducteur synchrone monophasé.

5. Système de filtre (1) selon l'une des revendications 1 à 3, dans lequel l'entraînement de racloir comprend :
un moteur à courant continu,
un dispositif de mesure pour la mesure d'une vitesse et/ou d'un couple de l'entraînement de racloir, et
une unité de commande aménagée afin de modifier le sens de rotation du moteur à courant continu en fonction de la vitesse et/ou du couple de l'entraînement de racloir.

6. Système de filtre (1) selon l'une des revendications précédentes, dans lequel l'entraînement de racloir comprend :
un moteur pour générer une énergie de rotation, et
une transmission (5), en particulier une transmission à manivelle aménagée afin de transmettre l'énergie de rotation du moteur de telle sorte au racloir (2) que le racloir (2) se déplace de façon oscillante sur la zone de raclage (4) de la surface de filtre (3),
dans lequel la transmission (5) présente un accouplement à friction et/ou un élément élastique, de sorte que la zone de raclage (4) présente une taille variable.

7. Système de filtre (1) selon l'une des revendications précédentes, dans lequel le système de filtre (1) comprend en outre un capteur aménagé afin de capter des informations concernant le fonctionnement du racloir (2), en particulier une amplitude du racloir.

8. Appareil ménager à circulation d'eau comprenant :
un espace de traitement,
une pompe pour le pompage du fluide en dehors de l'espace de traitement,
un système de filtre (1) selon l'une des revendications 1 à 7,
dans lequel le fluide pompé en dehors de l'espace de traitement est intégralement ou partiellement mené vers le système de filtre.

9. Procédé de filtrage d'un fluide dans un appareil ménager à circulation d'eau, dans lequel le procédé comprend les étapes suivantes :
faire passer le fluide à filtrer à travers une surface de filtre (3) afin de filtrer les particules (9) du fluide,
racler de façon oscillante une zone de raclage (4) de la surface de filtre (3), afin d'enlever les particules (9) de la zone de raclage (4) et de les faire parvenir à un dépôt (8),
dans lequel une taille de la zone de raclage (4) dépend d'une quantité de particules dans le dépôt (8), de sorte que la zone de raclage (4) présente une taille variable, dans lequel un entraînement de racloir inverse un sens de déplacement du racloir (2) lorsqu'une résistance prédéterminée se manifeste au niveau du racloir (2).
